(19) **Europäisches Patentamt / European Patent Office / Office européen des brevets**

(11) **EP 2 484 738 A1**

(12) **EUROPEAN PATENT APPLICATION**
published in accordance with Art. 153(4) EPC

(43) Date of publication:
**08.08.2012 Bulletin 2012/32**

(21) Application number: **10820537.8**

(22) Date of filing: **29.09.2010**

(51) Int Cl.:
*C09J 133/14* (2006.01)    *C09J 7/00* (2006.01)
*C09J 11/06* (2006.01)     *C09J 133/08* (2006.01)
*C09J 133/24* (2006.01)

(86) International application number:
**PCT/JP2010/066875**

(87) International publication number:
**WO 2011/040422 (07.04.2011 Gazette 2011/14)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **29.09.2009   JP 2009224039
10.12.2009   JP 2009280671
27.04.2010   JP 2010102153**

(71) Applicant: **Lintec Corporation
Tokyo 173-0001 (JP)**

(72) Inventors:
• **NASU Kenji**
  **Tokyo 173-0001 (JP)**
• **HONGO Yuki**
  **Tokyo 173-0001 (JP)**

(74) Representative: **Jansen, Cornelis Marinus et al
VEREENIGDE
Johan de Wittlaan 7
2517 JR Den Haag (NL)**

(54) **ADHESIVE AGENT AND ADHESIVE SHEET**

(57)    An adhesive compositon of the present invention is characterized by including: an acrylic copolymer (A) containing 30 to 77% by weight of a structural unit (a1) derived from an alkyl acrylate monomer in which an alkyl group has 5 to 20 carbon atoms; 20 to 60% by weight of a structural unit (a2) derived from an alicyclic group-containing (meth)acrylate monomer; 0.01 to 5% by weight of a structural unit (a3) derived from a tertiary amino group-containing monomer that is derived from (meth)acrylic acid; and 0.1 to 10% by weight of a structural unit (a4) derived from a monomer containing a functional group excluding tertiary amino groups; and a crosslinking agent (B),

According to the present invention, it is possible to provide an adhesive composition capable of allowing the crosslinking reaction with a crosslinking agent to proceed smoothly and also shortening the period for stabilizing the adhesive composition without the use of heavy metals whose adverse impacts on the environment are concerned, while achieving a sufficient level of adhesion strength to an adherend regardless of the degree of the surface polarity thereof.

## FIG. 1

EP 2 484 738 A1

**Description**

[Technical Field]

The present invention relates to an adhesive composition and an adhesive sheet.
Priority is claimed from Japanese Patent Application No. 2009-224039, filed September 29, 2009, Japanese Patent Application No. 2009-280671, filed December 10, 2009, and Japanese Patent Application No. 2010-102153, filed April 27, 2010, the contents of which are incorporated herein by reference.

[Background Art]

In recent years, as the mobile terminals such as mobile phones and tablet computers have become multifunctional, their ease of operation is being required, which led to the popularization of touch panels (hereafter, abbreviated as TP). Within the surface or inside of the TP, liquid crystal displays and optical recording media, when subtle irregular defects are present on the surface or interface of the member thereof, there is a problem of reduced visibility because light is scattered, refracted and reflected at these defect portions to cause opaqueness.
For this reason, a hard coat (hereafter, abbreviated as HC) film is attached thereto in order to protect the surface of the device. A leveling agent such as silicone or fluorine-based resin is incorporated in a composition for HC which is coated on the surface of the HC film so as to make the surface smooth. Because the leveling agent improves the leveling properties of the coating film by reducing the surface tension of the composition for HC, the surface of the HC layer coated on a substrate exhibits low polarity although the surface becomes smooth.
Examples of the components for constituting mobile terminals include the materials with a low polarity surface as described above, and materials having a polar surface such as glass, polycarbonate resins and acrylic resins. Accordingly, in order to laminate these components, an adhesive composition exhibiting a high degree of adhesion to both low polarity surfaces and high polarity surfaces may be required in some cases.
However, many of the strong adhering type adhesive compositions that are commonly used exhibit a high degree of polarity. For this reason, in those cases where the adhesive compositions are used on a low polarity surface, there is a problem in that the adhesive strength reduces.
In addition, mobile terminals may also be exposed to high temperature environments, for example, in a vehicle during the summer months.
Accordingly, in order to laminate these components, an adhesive composition exhibiting high adhesion strength not only at room temperature, but also under a high temperature environment, may be required in some cases.
In addition, when a target for attachment is a plate made of resins such as polycarbonate resins and acrylic resins, an adhesive composition to suppress the foaming may be required in some cases, because there is also a problem in that defects due to the foaming appear in the interface between the resin plate and the adhesive layer in a high temperature environment.
Examples of the components for constituting mobile terminals include the aforementioned materials with a low polarity surface, transparent polymer substrates, laminates prepared by forming a transparent conductive film made of a conductive material such as indium oxide added with tin on a glass, and materials such as glass, polycarbonate resins and acrylic resins.
Accordingly, for an adhesive composition used for fixing the mobile terminals, the capacity for exhibiting a high adhesion strength or, when being brought into direct contact with the transparent conductive film, the capacity for not changing the electrical resistance of the transparent conductive film may be required in some cases, regardless of the degree of polarity of the adherend.
In addition, in order not to reduce the visibility, the capacity for not changing the optical properties, such as the haze value and total light transmittance, after the durability test may be required in some cases.
In order to solve such problems, an adhesive composition for low polarity materials which exhibits a high adhesion strength even to an adherend with low polarity has been proposed (for example, refer to Patent Document 1).
In Patent Document 1, an adhesive composition has been proposed which improves the adhesion to low polarity materials and the durability, and which does not cause foaming or detachment even when being left to stand in a high temperature environment after being adhered to a glass substrate, due to the copolymerization of alicyclic group-containing (meth)acrylate monomers or aromatic cyclic group-containing (meth)acrylate monomers. More specifically, an adhesive composition for low polarity film has been disclosed which contains: (A) a high molecular weight polymer having a weight average molecular weight within a range of 1,000,000 to 2,000,000, which is formed by copolymerizing at least the following components (a1), (a2) and (a3), (a1) 30 to 90% by weight of alkyl (meth)acrylate ester, (a2) 9 to 50% by weight of alicyclic monomers or aromatic ring-containing monomers, and (a3) 0.5 to 10% by weight of functional group-containing monomer; and (B) a crosslinking agent.
However, possibly due to the steric hindrance, a problem arises in that the rate of crosslinking reaction between the hydroxyl groups of acrylic copolymer and the crosslinking agent is reduced.

In order to solve such problems, acrylic acid, carboxyl group-containing acrylate monomers or primary amino group-containing monomers (such as acrylamide) may be introduced into the acrylic copolymer, usually for the sake of promoting the crosslinking between the hydroxyl groups of acrylic copolymer and the crosslinking agent.

However, because the problems of metal corrosion and corrosion of the transparent conductive film arise when acrylic acid and a carboxyl group-containing acrylate monomer are introduced, the application of adhesive compositions is limited. In addition, it has been confirmed by the inventors of the present invention that the introduction of primary amino group-containing acrylate monomers or acrylamide results in the reduction of adhesion to the low polarity adherends. Moreover, acrylamide has been designated as a poisonous substance. Further, tin-based and cobalt-based metal salts have been known as reaction accelerators to promote the crosslinking reaction, although there is concern about adverse impacts on the environment since they are heavy metals.

Furthermore, with respect to the adhesive composition disclosed in Patent Document 1, although there is no problem when being adhered to a glass substrate, it has been found that foaming occurs in about 250 hours under a high temperature environment of 80°C when being adhered to a resin plate.

In addition, in Patent Document 2, an adhesive composition exhibiting excellent adhesion to plastics and anti-foaming properties has been proposed. More specifically, in Patent Document 2, an adhesive composition has been disclosed which contains a resin composition (1) and a resin composition (2) and is prepared by adding 1 to 40% by weight of the resin composition (2) relative to 100 parts by weight of the resin composition (1); the resin composition (1) having a weight average molecular weight of at least 800,000, which includes alkyl (meth)acrylate esters composed of alkyl groups of 1 to 12 carbon atoms as main components and which is obtained by copolymerizing therewith 0.5 to 10% by weight of copolymerizable unsaturated monomers containing a carboxyl group; and the resin composition (2) having a glass transition temperature (Tg) of 40°C and a weight average molecular weight of 100,000 or less, which includes one or more monomers selected from alkyl methacrylate esters composed of alkyl groups of 1 to 20 carbon atoms, or cycloalkyl methacrylate esters benzyl methacrylate or styrene as main components and which is obtained by copolymerizing therewith 0.5 to 10% by weight of copolymerizable unsaturated monomers containing an amino group. However, because the adhesive composition disclosed in Patent Document 2 includes a resin composition containing a carboxyl group with high polarity as an essential component, there is a problem in that a sufficient level of adhesion cannot be achieved with respect to low polarity surfaces. In addition, there is also a problem of corrosion of transparent conductive films.

Further, an adhesive composition has been proposed with an aim to effectively prevent corrosion of a metal layer (for example, refer to Patent Document 3).

In Patent Document 3, an adhesive sheet for adhering to a metal has been disclosed, the adhesive sheet characterized in that an adhesive layer is formed on at least one surface of a substrate. The adhesive composition includes an acrylic copolymer (A) comprised alkyl (meth)acrylates as main monomer components and prepared by copolymerizing therewith a carboxyl group-containing monomer in an amount of at least 1% by weight and less than 3% by weight, and is also formed by containing benzotriazole and/or its derivative (B) in an amount of 1 to 10 parts by weight relative to 100 parts by weight of the acrylic copolymer (A) where no hydroxyl group-containing monomer is substantially copolymerized. The adhesive layer is obtained through crosslinking by using the adhesive composition and an epoxy crosslinking agent (C) having a functional group Z which may be reacted with a carboxyl group X in the aforementioned acrylic copolymer (A) in an amount such that the equivalent ratio (X: Z) of the functional groups Z within the aforementioned epoxy crosslinking agent (C) to the carboxyl groups X within the acrylic copolymer (A) is 1: 0.01 to 1: 0.4.

However, in the adhesive composition described in Patent Document 3, although benzotriazole or its derivative has been incorporated as an essential component of the adhesive composition for the sake of preventing the metal corrosion, there is a concern about the problem of variations in adhesion due to the bleeding out of benzotriazole and its derivative or the discoloration of the aforementioned components due to aging.

[Citation List]

[Patent Documents]

[Patent Document 1] Japanese Unexamined Patent Application, First Publication No. 2005-053976
[Patent Document 2] Japanese Unexamined Patent Application, First Publication No. Hei 10-310754
[Patent Document 3] Japanese Unexamined Patent Application, First Publication No. 2006-045315

[Summary of Invention]

[Technical Problem]

The present invention has been developed in light of the above circumstances.

One object of the present invention is to provide an adhesive composition that allows the crosslinking reaction with a crosslinking agent to proceed smoothly and is also capable of shortening the time to stabilize an adhesive composition without the use of heavy metals whose adverse environmental impacts are of concern, while exhibiting a sufficient level of adhesion strength to an adherend regardless of the degree of the surface polarity thereof.

Another object of the present invention is to provide an adhesive composition that is capable of maintaining a sufficient level of adhesion strength even under high temperature environments and is also capable of suppressing the foaming that occurs at the interface with the adhesive composition when being adhered to a resin plate, while exhibiting a sufficient level of adhesion strength to an adherend regardless of the degree of the surface polarity thereof.

Yet another object of the present invention is to provide an adhesive composition that is capable of maintaining a sufficient level of adhesion strength even under high temperature environments and is also capable of suppressing the changes in the optical properties after the durability test, while exhibiting a sufficient level of adhesion strength to an adherend regardless of the degree of the surface polarity thereof.

[Solution to Problem]

That is, the present invention includes the following aspects.

(1) An adhesive composition characterized by including: an acrylic copolymer (A) containing 30 to 77% by weight of a structural unit (a1) derived from an alkyl acrylate monomer in which an alkyl group has 5 to 20 carbon atoms; 20 to 60% by weight of a structural unit (a2) derived from an alicyclic group-containing (meth)acrylate monomer; 0.01 to 5% by weight of a structural unit (a3) derived from a tertiary amino group-containing monomer that is derived from (meth)acrylic acid; and 0.1 to 10% by weight of a structural unit (a4) derived from a monomer containing a functional group excluding tertiary amino groups; and a crosslinking agent (B).

(2) The adhesive composition according to the aspect (1), wherein the aforementioned alkyl acrylate monomer is at least one member selected from 2-ethylhexyl acrylate, isooctyl acrylate and n-hexyl acrylate.

(3) The adhesive composition according to the above aspect (1) or (2), wherein the aforementioned alicyclic group-containing (meth)acrylate monomer is at least one member selected from cyclohexyl (meth)acrylate, dicyclopentanyl (meth)acrylate and isobornyl (meth)acrylate.

(4) The adhesive composition according to any one of the aspects (1) to (3), wherein the aforementioned tertiary amino group-containing monomer that is derived from (meth)acrylic acid is at least one member selected from dimethylaminoethyl (meth)acrylate, dimethylaminopropyl (meth)acrylamide and diethylaminoethyl (meth)acrylate.

(5) The adhesive composition according to any one of the aspects (1) to (4), wherein the aforementioned monomer containing a functional group excluding tertiary amino groups is a hydroxyl group-containing monomer.

(6) An adhesive sheet including a release sheet laminated on both sides of an adhesive layer composed of the adhesive composition according to any one of the aspects (1) to (5).

(7) An adhesive sheet including an adhesive layer composed of the adhesive composition according to any one of the aspects (1) to (5) on at least one side of a substrate.

(8) The adhesive sheet according to the aspect (6) or (7) which can be adhered to both low polarity surfaces of a hard coat film having a contact angle for water at 25 ˚C from 72˚ to 120˚, and surfaces of a polar material.

(9) The adhesive sheet according to the aspect (8), wherein the aforementioned polar material is glass, a polycarbonate resin or an acrylic resin.

(10) The adhesive sheet according to any one of the aspects (6) to (9), which is used for internal fixation in mobile information terminals.

In the present description and the claims, a "structural unit" refers to a monomer unit constituting a resin component (namely, a polymer or copolymer).

The term "(meth)acrylate" is a generic term that includes either or both of the acrylate having a hydrogen atom bonded to the α-position and the methacrylate having a methyl group bonded to the α-position.

The term "(meth)acrylic acid" is a generic term that includes either or both of the acrylic acid having a hydrogen atom bonded to the α-position and the methacrylic acid having a methyl group bonded to the α-position.

[Advantageous Effects of Invention]

According to an aspect of the adhesive composition of the present invention, (1) the crosslinking reaction with a crosslinking agent is allowed to proceed smoothly, and the time to stabilize an adhesive composition can be shortened without the use of heavy metals whose adverse environmental impacts are of concern, while achieving a sufficient level of adhesion strength to an adherend regardless of the degree of the surface polarity thereof.

According to an aspect of the adhesive composition of the present invention, (2) a sufficient level of adhesion strength can be maintained even under high temperature environments and the foaming that occurs at the interface with the adhesive composition when being adhered to a resin plate can also be suppressed, while achieving a sufficient level of adhesion strength to an adherend regardless of the degree of the surface polarity thereof.

According to an aspect of the adhesive composition of the present invention, (3) a sufficient level of adhesion strength can be maintained even under high temperature environments and the changes in the optical properties can also be suppressed after the durability test, while achieving a sufficient level of adhesion strength to an adherend regardless of the degree of the surface polarity thereof.

According to an aspect of the adhesive sheet of the present invention, this adhesive sheet can be used as an adhesive sheet for adherends made of a variety of materials because it has an adhesive layer constituted of the aforementioned adhesive composition so that a sufficient level of adhesion strength can be achieved regardless of the degree of the surface polarity of the adherend.

In addition, according to an aspect of the adhesive sheet of the present invention, changes in the optical properties after the durability test can be reduced, thereby hardly causing the discoloration or opaqueness even in harsh environments, and when used in devices such as mobile information terminals, the quality of these devices can be improved.

[Brief Description of Drawings]

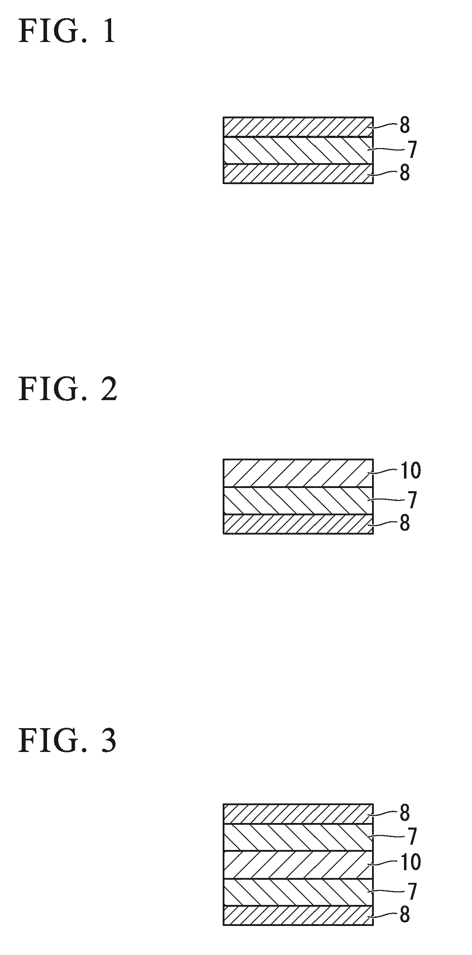

FIG. 1 is a cross sectional view of one embodiment of a double-sided adhesive sheet without a substrate in which release sheets are laminated on both sides of an adhesive layer composed of an adhesive composition of the present invention.

FIG. 2 is a cross sectional view of one embodiment of a single-sided adhesive sheet with a substrate in which an adhesive layer composed of an adhesive composition of the present invention is formed on one side of the substrate and a release sheet is laminated on this adhesive layer.

FIG. 3 is a cross sectional view of one embodiment of a double-sided adhesive sheet with a substrate in which adhesive layers composed of an adhesive composition of the present invention is formed on both sides of the substrate and release sheets are laminated on each adhesive layer.

FIG 4 is a cross sectional view of a sample for measuring the resistance which is used in an electrical resistance measurement test.

FIG. 5 is an explanatory diagram of the electrical resistance measurement test.

[Description of Embodiments]

An adhesive composition of the present invention includes: an acrylic copolymer (A) containing 30 to 77% by weight of a structural unit (a1) derived from an alkyl acrylate monomer in which an alkyl group has 5 to 20 carbon atoms; 20 to 60% by weight of a structural unit (a2) derived from an alicyclic group-containing (meth)acrylate monomer; 0.01 to 5% by weight of a structural unit (a3) derived from a tertiary amino group-containing monomer that is derived from (meth)acrylic acid; and 0.1 to 10% by weight of a structural unit (a4) derived from a monomer containing a functional group excluding tertiary amino groups; and a crosslinking agent (B).

The structural unit (a1) within the acrylic copolymer (A) is an alkyl acrylate monomer having an alkyl group of 5 to 20 carbon atoms. The number of carbon atoms in the alkyl group is more preferably 6 to 14, and particularly preferably 8 to 12. As the alkyl acrylate monomer, 2-ethylhexyl acrylate, isooctyl acrylate, n-hexyl acrylate, lauryl acrylate, stearyl acrylate or the like is preferred, and 2-ethylhexyl acrylate, isooctyl acrylate and n-hexyl acrylate are more preferred because they exhibit a sufficient level of adhesion strength to low polarity surfaces. Of these, 2-ethylhexyl acrylate is particularly preferred since it is readily available. It is essential that the content of the structural unit (a1) based on the combined total weight of monomers constituting the acrylic copolymer (A) be 30 to 77% by weight. The content of the structural unit (a1) is preferably 35 to 75% by weight, more preferably 35 to 70% by weight, and particularly preferably 40 to 70% by weight in view of achieving a sufficient level of adhesion to the low polarity surfaces while maintaining the content of the structural unit (a2).

The structural unit (a2) within the acrylic copolymer (A) is an alicyclic group-containing (meth)acrylate monomer.

An "alicyclic group" within the alicyclic group-containing (meth)acrylate monomer refers to a cyclic aliphatic group (cycloalkyl group) that has no aromaticity. An alicyclic group-containing (meth)acrylate monomer may be a monocyclic compound or a polycyclic compound. The number of carbon atoms within the alicyclic group is preferably within a range from 5 to 20, and more preferably from 6 to 10. As an alicyclic group-containing (meth)acrylate monomer, cyclohexyl (meth)acrylate, dicyclopentanyl (meth)acrylate, isobornyl (meth)acrylate or the like is preferred, and cyclohexyl (meth)acrylate, dicyclopentanyl (meth)acrylate or isobornyl (meth)acrylate is more preferred. Of these, cyclohexyl (meth)acrylate is particularly preferred from the viewpoints of achieving a sufficient level of adhesion strength to low polarity surfaces and suppressing the foaming that occurs at the interface with a plastic panel.

The content of the structural unit (a2) based on the combined total weight of monomers constituting the acrylic copolymer (A) is preferably 20 to 60% by weight, more preferably 25 to 55% by weight, and particularly preferably 30 to 50% by weight. In those cases where the content of alicyclic group-containing (meth)acrylate monomer is equal to or greater than 20%, a sufficient level of adhesion strength can be obtained with respect to the low polarity materials.

The structural unit (a3) within the acrylic copolymer (A) is a tertiary amino group-containing monomer derived from (meth)acrylic acid.

Examples of the tertiary amino group-containing monomers derived from (meth)acrylic acid include tertiary amino group-containing (meth)acrylate monomers and tertiary amino group-containing N-substituted (meth)acrylamide monomers.

As a tertiary amino group-containing (meth)acrylate monomer, dialkylaminoalkyl (meth)acrylate which improves the copolymerizability with other monomers is preferred. Here, when the tertiary amino group-containing monomer includes alkyl groups, these alkyl groups may be the same or different from each other, and may be linear, branched or cyclic alkyl groups. In addition, each of the aforementioned alkyl groups independently includes 1 to 10 carbon atoms, and preferably 1 to 5 carbon atoms. Specific examples of the tertiary amino group-containing (meth)acrylate monomers include dimethylaminoethyl (meth)acrylate, dimethylaminopropyl (meth)acrylate, dimethylaminobutyl (meth)acrylate, diethylaminoethyl (meth)acrylate, diethylaminopropyl (meth)acrylate, diethylaminobutyl (meth)acrylate, di-butylaminoethyl (meth)acrylate, (pyrrolidin-1-yl) methyl (meth)acrylate, (pyrrolidin-1-yl) ethyl (meth)acrylate, (pyrrolidin-1-yl) propyl (meth) acrylate and (pyrrolidin-1-yl) butyl (meth)acrylate.

A "tertiary amino group-containing N-substituted (meth)acrylamide monomer" refers to a monomer in which a substituent containing a tertiary amino group is bonded onto the nitrogen atom that forms an amide group. As a tertiary amino group-containing, N-substituted (meth)acrylamide monomer, dialkylaminoalkyl (meth)acrylamide is preferred. Here, examples of the substituent on the nitrogen atom with respect to the tertiary amino group-containing N-substituted (meth)acrylamide monomer include linear, branched or cyclic alkyl groups. In addition, each of the aforementioned alkyl groups independently includes 1 to 10 carbon atoms, and preferably 1 to 5 carbon atoms. Specific examples of the dialkylaminoalkyl (meth)acrylamide include dimethylaminoethyl (meth)acrylamide, dimethylaminopropyl (meth)acrylamide, diethylaminoethyl (meth)acrylamide and diethylaminopropyl (meth)acrylamide.

Among the tertiary amino group-containing monomers derived from (meth)acrylic acid, dimethylaminoethyl acrylate, dimethylaminopropyl acrylamide or diethylaminoethyl methacrylate is preferred, and dimethylaminoethyl acrylate is more preferred.

The content of the structural unit (a3) based on the combined total weight of monomers constituting the acrylic copolymer (A) is preferably 0.01 to 5% by weight, more preferably 0.05 to 1% by weight, and particularly preferably 0.1 to 0.5% by weight. When the content is equal to or more than 0.01% by weight, the effect of promoting the crosslinking between the functional group of the structural unit (a4) and a crosslinking agent can be achieved satisfactorily, and the adhesion strength can be lead to a stable range within a short period of time without the use of a crosslinking accelerator based on heavy metals such as organic tin. In addition, when the content is equal to or less than 5% by weight, the stability of the adhesive composition in a solution state is improved.

The structural unit (a4) within the acrylic copolymer (A) is a monomer containing a functional group excluding tertiary amino groups.

The expression "functional group" with respect to the monomer containing a functional group excluding tertiary amino groups refers to a reactive functional group, exclusive of tertiary amino groups, such as a hydroxyl group and a carboxyl group which is capable of reacting and bonding with the crosslinking agent (B). Examples of the monomers containing a functional group excluding tertiary amino groups include hydroxyl group-containing monomers and carboxyl group-containing monomers.

Examples of the hydroxyl group-containing monomers include hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate and 4-hydroxybutyl (meth)acrylate.

Examples of the carboxyl group-containing monomers include acrylic acid, methacrylic acid, crotonic acid, fumaric acid, itaconic acid, maleic acid and 2-carboxyethyl methacrylate. In order to suppress the changes in the electrical resistance of a transparent conductive film while achieving a sufficient level of adhesion strength to the low polarity surfaces, hydroxyl group-containing monomers with a relatively low polarity are preferred, and 2-hydroxyethyl acrylate exhibiting a sufficient adhesion strength is particularly preferred.

The content of the structural unit (a4) based on the combined total weight of monomers constituting the acrylic copolymer (A) is preferably 0.1 to 10% by weight, more preferably 0.15 to 7% by weight, and particularly preferably 0.2 to 5% by weight. When the content is equal to or more than 0.1% by weight, the cohesive force does not decline. On the other hand, when the content is equal to or less than 10% by weight, the polarity of the adhesive composition does not increase, and a sufficient level of adhesion strength to low polarity surfaces can be achieved. Moreover, when stored under high temperature and high humidity conditions, the content of the structural unit (a4) is preferably more than 1% by weight and equal to or less than 10% by weight, and more preferably 2 to 8% by weight in view of suppressing the haze value. By making the content of the structural unit (a4) within a range from more than 1% by weight to 10% by weight or less, in the resulting adhesive composition, the cohesive force does not decline and an increase in haze after the durability test can also be suppressed.

In addition, as a structural unit within the acrylic copolymer (A), for the purpose of controlling the adhesion strength or cohesive force, monomers other than the structural units (a1) to (a4) may be optionally incorporated within the range to satisfy the content ratio of the structural units (a1) to (a4). These other monomers can be selected from monomers copolymerizable with the aforementioned acrylic monomers, and examples thereof include alkyl acrylate monomers having an alkyl group of 1 to 7 carbon atoms, alkyl methacrylate monomers having an alkyl group of 1 to 18 carbon atoms and vinyl monomers.

Examples of the alkyl acrylate monomers having an alkyl group of 1 to 7 carbon atoms include methyl acrylate, ethyl acrylate, propyl acrylate, isopropyl acrylate, isobutyl acrylate and n-hexyl acrylate. Further, examples of the alkyl methacrylate monomers having an alkyl group of 1 to 18 carbon atoms include methyl methacrylate, ethyl methacrylate, propyl methacrylate, n-butyl methacrylate, isopropyl methacrylate, butyl methacrylate, hexyl methacrylate, 2-ethylhexyl methacrylate and lauryl methacrylate. Furthermore, examples of the vinyl monomers include styrene, $\alpha$-methyl styrene, vinyl toluene, vinyl formate, vinyl acetate, acrylonitrile, glycidyl acrylate and glycidyl methacrylate.

The weight average molecular weight of the acrylic copolymer (A) is preferably 200,000 or more, more preferably from 400,000 or more to 2,000,000 or less, and particularly preferably from 500,000 or more to 1,500,000 or less. When the weight average molecular weight is 200,000 or more, the cohesive force of an adhesive composition is improved, and when the weight average molecular weight is 2,000,000 or less, the polymerization at the time of polymer synthesis is facilitated.

The crosslinking agent (B) is an agent that facilitates the crosslinking of the aforementioned acrylic copolymer (A), and examples thereof include organic polyvalent isocyanate compounds, organic polyvalent epoxy compounds and organic polyvalent imine compounds. Of these, from the viewpoints of availability and the like, organic polyvalent isocyanate compounds are preferred.

Examples of the organic polyvalent isocyanate compounds include 2,4-tolylene diisocyanate, 2,6-tolylene diisocyanate, 1,3-xylylene diisocyanate, 1,4-xylylene diisocyanate, diphenylmethane-4,4'-diisocyanate, diphenylmethane-2,4'-diisocyanate, 3-methyldiphenylmethane diisocyanate, hexamethylene diisocyanate, isophorone diisocyanate, dicyclohexyl methane-4,4'-diisocyanate, dicyclohexylmethane-2,4'-diisocyanate and lysine isocyanate. Trimers of these polyvalent isocyanate compounds as well as the isocyanate-terminated urethane prepolymers and the like that are obtained by reacting these polyvalent isocyanate compounds with polyol compounds can also be used.

Examples of the organic polyvalent epoxy compounds include bisphenol A-type epoxy compounds, bisphenol F-type epoxy compounds, 1,3-bis(N,N-diglycidyl aminomethyl)toluene and N,N,N',N'-tetraglycidyl-4,4-diaminodiphenylmethane.

Examples of the organic polyvalent imine compounds include N,N'-diphenylmethane-4,4'-bis(1-aziridine carboxyamide), trimethylolpropane-tri-(3-aziridinyl propionate, tetramethylolmethane-tri-$\beta$-aziridinyl propionate and N,N'-toluene-2,4-bis(1-aziridine carboxyamide)triethylene melamine.

The added amount of the crosslinking agent (B) is preferably set to approximately 0.01 to 10 parts by weight, more preferably set to approximately 0.03 to 7 parts by weight, and particularly preferably set to approximately 0.05 to 5 parts by weight, relative to 100 parts by weight of the acrylic copolymer (A). When the added amount of the crosslinking agent (B) is 0.01 parts by weight or more, cohesive force of the adhesive composition which is sufficient for maintaining the shape in response to the stress in the shear direction can be achieved, whereas when the added amount is 10 parts by weight or less, a sufficient level of adhesion strength can be achieved.

In those cases where the added amount of the crosslinking agent (B) is from at least 0.01 parts by weight to 10 parts by weight or less, relative to 100 parts by weight of the solid content of the acrylic copolymer (A), it is preferred because it exhibits a sufficient level of adhesion strength to an adherend regardless of the degree of the surface polarity thereof. When the added amount of the crosslinking agent (B) is more than 0.375 parts by weight to 10 parts by weight or less, relative to 100 parts by weight of the solid content of the acrylic copolymer (A), it is preferred because it is capable of maintaining a sufficient level of adhesion strength even under high temperature environments and is also capable of suppressing the foaming that occurs at the interface with the adhesive composition when being adhered to a resin plate, while exhibiting a sufficient level of adhesion strength to an adherend regardless of the degree of the surface polarity thereof.

In addition, other additives may be incorporated in the adhesive composition of the present invention as necessary. Examples of the additives include ultraviolet absorbers, tackifiers, softeners (plasticizers), fillers, antioxidants, rust inhibitors, pigments and dyes.

Examples of the ultraviolet absorbers include those which have been conventionally used in adhesive compositions, such as benzotriazole-based ultraviolet absorbers, benzophenone-based ultraviolet absorbers and triazine-based ultraviolet absorbers.

Examples of the tackifiers include those which have been conventionally used in adhesive compositions, such as rosin and its derivatives, polyterpenes, terpene phenol resins, coumarone-indene resins, petroleum resins, styrene resins and xylene resins.

Examples of the softeners include liquid polyethers, glycol esters, liquid polyterpenes, liquid polyacrylates, phthalic acid esters and trimellitic acid esters.

The composition of the present invention can be obtained by adding the acrylic copolymer (A) containing the aforementioned structural units (a1), (a2), (a3) and (a4) and other optional monomers, the crosslinking agent (B), and if necessary, various additives.

The gel content of the adhesive composition of the present invention is preferably at least 50%, more preferably 65% or more and particularly preferably 75% or more.

If the gel content is less than 50%, foaming may occur when being adhered to a resin plate.

This gel content can be adjusted depending on the type and content of the structural unit (a4) derived from a monomer containing a functional group excluding tertiary amino groups, which is one of the structural units of the acrylic copolymer (A), the weight average molecular weight of the acrylic copolymer (A), and on the type and amount of the crosslinking agent (B).

The storage elastic modulus of the adhesive composition of the present invention at 80˚C is preferably at least 20,000 Pa, more preferably 25,000 Pa or more, and particularly preferably 30,000 Pa or more.

When the storage elastic modulus is 20,000 Pa or more, foaming can be suppressed more effectively, thereby improving the durability under severe environments such as high temperature and high humidity conditions.

Further, the storage elastic modulus of the adhesive composition of the present invention at 80˚C is preferably not more than 50,000 Pa, and more preferably 100,000 Pa or less.

In addition, an organic solvent may be incorporated in the adhesive composition of the present invention in order to facilitate the coating process. Examples of the organic solvent include methyl ethyl ketone, acetone, ethyl acetate, tetrahydrofuran, dioxane, cyclohexane, n-hexane, toluene, xylene, n-propanol and isopropanol. With respect to these organic solvents, an organic solvent that was used in the preparation of the acrylic copolymer (A) and crosslinking agent (B) can be used as it is, or one or more types of organic solvent other than the organic solvent used in the preparation may be added thereto so that an adhesive layer can be coated uniformly.

The adhesive composition of the present invention can be used to form an adhesive sheet composed of only a single layer, because it exhibits strong adhesion properties to both hard coat layers with low polarity surfaces and polycarbonate with high polarity. An adhesive sheet having a single layer of adhesive composition may be a form of double-sided adhesive sheet without a substrate.

Various types of release sheets can be used as the release sheet used in the adhesive sheet of the present invention. Typically, they are constituted of a substrate for release sheets exhibiting release properties on the surface thereof. Examples of the substrates for release sheets include resin films such as polyethylene terephthalate, polyethylene, polypropylene, polybutene, polybutadiene, polymethylpentene, polyvinyl chloride, vinyl chloride copolymers, polybutylene terephthalate, polyurethane, ethylene-vinyl acetate copolymers, ionomer resins, ethylene-(meth)acrylic acid copolymers, polystyrene, polycarbonate, fluorine resins, low-density polyethylene, linear low-density polyethylene and triacetyl cellulose, or wood free paper, coated paper, glassine paper and laminated paper.

In order to provide release properties on the surface of a substrate for release sheets, release agents such as fluorine resins, silicone resins and long chain alkyl group-containing carbamate are deposited on the surface thereof by a coating process.

The thickness of the substrate for release sheets is preferably from 5 to 300 $\mu$m, and more preferably from 10 to 200 $\mu$m. When a polyethylene terephthalate-based film is used as a substrate for release sheets, the thickness is particularly preferably from 10 to 100 $\mu$m.

Examples of the methods for coating the adhesive composition of the present invention onto a release sheet include a method of coating a composition containing the adhesive composition using conventionally known methods, such as a gravure coating method, a bar coating method, a spray coating method, a spin coating method, a roll coating method, a die coating method, a knife coating method, an air knife coating method and a curtain coating method. After coating the adhesive-containing composition, the adhesion properties are developed by heating at a temperature of about 80˚C to 150˚C for about 30 seconds to 5 minutes in order to prevent the persistence of solvents or components with low boiling points.

There are no particular limitations on the coating apparatus, and a known apparatus can be used. The coating amount after drying is preferably within the range of 1 to 200 g/m$^2$, more preferably within the range of 3 to 150 g/m$^2$, still more preferably within the range of 5 to 100 g/m$^2$, and particularly preferably within the range of 10 to 60 g/m$^2$. Satisfactory adhesion performance can be achieved by setting the coating amount after drying to at least 1 g/m$^2$, and the ooze of adhesive layers can be prevented by setting the coating amount after drying to 200 g/m$^2$ or less.

The thickness of the adhesive layer after drying is preferably within the range of 1 to 200 $\mu$m, more preferably within the range of 5 to 100 $\mu$m, and particularly preferably within the range of 10 to 60 $\mu$m.

Satisfactory adhesion performance can be achieved by setting the thickness to at least 1 $\mu$m, and the oozing of adhesive layers can be prevented by setting the thickness to 200 $\mu$m or less.

Two pieces of release sheets are required when made into a form of double-sided adhesive sheet without a substrate. To an adhesive layer coated with a release sheet, another piece of release sheet is laminated, thereby forming a laminate. During this case, each of the release sheets preferably exhibits a different level of peel force.

By providing the difference in peel strength, when removing only the release sheet of low release force type side, it is possible to prevent the detachment of adhesive layer from the release sheet of high release force type side or the stretching and deformation of adhesive layer which failed to separate from both the release sheets.

Alternatively, it is also possible to coat an adhesive layer on one side of the release sheet coated with a release agent on both sides, and then rolling the resultant into a roll shape.

The present invention may be made into a form of adhesive sheet with a substrate which is composed of the substrate and the above adhesive composition. The adhesive sheet with a substrate may be a double-sided adhesive sheet with a substrate in which the adhesive layer is coated on both sides of the substrate or may be a single-sided adhesive sheet with a substrate in which the adhesive layer is coated on one side.

In those cases where the adhesive sheet is formed as a double-sided adhesive sheet with a substrate, it is preferable to use the adhesive composition of the present invention on both sides, although two different types of adhesive compositions may be laminated onto the substrate. In this case, it is possible to employ the adhesive composition of the present invention for one of the adhesive compositions. Also, if a certain degree of thickness is required for the double-sided adhesive sheet, the total thickness of the double-sided adhesive sheet can be adjusted through the thickness of the substrate.

In those cases where the adhesive sheet is formed as a single-sided adhesive sheet with a substrate, it can be used as a label which can be employed without being affected by the material of the adherend.

Examples of the substrates used in the double-sided adhesive sheet with a substrate or single-sided adhesive sheet with a substrate according to the present invention include sheets, films or their laminates foams made of resins such as resin films of polyethylene terephthalate, polyethylene naphthalate, polyimide, polyetherimide, polyaramid, polyether ketones, polyether ether ketone, polyphenylene sulfide, poly(4-methylpentene-1)polyethylene, polypropylene, polybutene, polybutadiene, polymethylpentene, polyvinyl chloride, vinyl chloride copolymers, polyethylene terephthalate, polyurethane, ethylene-vinyl acetate copolymers, ionomer resins, ethylene-(meth)acrylic acid copolymers, polystyrene, polycarbonate, fluorine resins, low-density polyethylene, linear low-density polyethylene, triacetyl cellulose or the like, and paper substrates such as wood free paper, coated paper, glassine paper and laminated paper.

The thickness of the substrate used in embodiment of the double-sided adhesive sheet with a substrate or single-sided adhesive sheet with a substrate according to the present invention varies slightly depending on the material used, but is preferably 5 to 300 $\mu$m, and more preferably 10 to 100 $\mu$m.

With regard to the process for preparing a double-sided adhesive sheet with a substrate, two pieces of double-sided adhesive sheets without a substrate from which one of the release sheets has been peeled off are adhered to both sides of the substrate, thereby forming a double-sided adhesive sheet with a substrate. Alternatively, a composition containing an adhesive composition is coated directly on both sides of the substrate, and the release sheets are adhered together, thereby forming a double-sided adhesive sheet with a substrate. Alternatively, a double-sided adhesive sheet without a substrate is adhered to one side of the substrate, and a composition containing an adhesive composition is coated directly on the other side of the substrate, thereby forming a double-sided adhesive sheet with a substrate.

With regard to the process for preparing a single-sided adhesive sheet with a substrate, a double-sided adhesive sheet is adhered to one side of the substrate to form a single-sided adhesive sheet with a substrate. Alternatively, a composition containing an adhesive composition is coated directly on one side of the substrate, and the release sheet is adhered thereto, thereby forming a single-sided adhesive sheet with a substrate.

Examples of the methods for directly coating a composition containing an adhesive composition on one or both sides of the substrate include methods known in the art, as in the case of methods for coating an adhesive composition on a release sheet.

There are no particular limitations on the adhesion target for the adhesive sheet of the present invention, although examples thereof include components of the mobile terminals, and the like. Specific examples thereof include materials having a low polarity surface, such as the HC films used in the TP displays and the HC films for protecting various displays. In addition, a high level of adhesion strength can be achieved, not only for such materials with a low polarity surface, but also for materials with a polar surface, which are the components of mobile terminals, such as glass, a polycarbonate resin or an acrylic resin.

The adhesive composition or adhesive sheet according to the present invention has a capacity for not changing the electrical resistance of the transparent conductive film, even when being brought into direct contact with the transparent conductive film.

The adhesive composition or adhesive sheet according to the present invention can be bonded, not only on the polar surfaces of glass, polycarbonate resin, acrylic resin or the like, but also on the low polarity surfaces of HC films, and exhibits an adhesion strength of at least 7N, and preferably 10N or more for low polarity surfaces of HC films. The term "low polarity surface" is defined as a surface having a contact angle for water at 25˚C from 72˚ to 120˚. It should be noted that the above contact angles for various plastic materials are as follows [according to "Application of Color Materials - design and application of polymers for color materials (2002)", written by Yoshinori Hoshino and published by CMC Publishing Co., Ltd.].

Polytetrafluoroethylene: 108 to 113˚; polypropylene: 95 to 98˚; polyethylene: 92 to 96˚; poly trifluoroethylene: 92˚; polytrifluorochloroethylene: 90˚; polystyrene: 83 to 87˚; polyvinyl chloride: 83 to 87˚; polyvinylidene chloride: 80˚; polyethylene terephthalate: 71 to 81˚; polymethyl methacrylate: 67 to 74˚; nylon (polyamide): 63 to 70˚.

The HC films as described above are films prepared by, for example, coating an HC layer to a thickness of about 0.5 to 30 $\mu$m on a substrate film having a thickness of about 30 to 200 $\mu$m in order to provide the scratch resistance and anti-glare properties.

Various plastic sheets and films can be used as a substrate film on which an HC layer is to be coated. Specific examples of the substrate films include films of various synthetic resins such as polyolefin resins including polyethylene resins and polypropylene resins, polyester resins including polyethylene terephthalate resins, polyethylene naphthalate resins and polybutylene terephthalate resins, polyvinyl chloride resins, polystyrene resins, polyurethane resins, polycarbonate resins, polyamide resins, polyimide resins and fluorine-based resins.

Examples of compositions for the HC layer include curable compositions containing an ionizing radiation curable compound and the cured products thereof, thermoplastic resins, thermosetting resin solutions, and cured products of a curable composition containing a thermosetting resin, and a curable composition containing an ionizing radiation curable compound is preferred.

For the ionizing radiation to be irradiated, ionizing radiations generated from various ionizing radiation generators are used.

For example, for the ultraviolet light, the ultraviolet rays irradiated from an ultraviolet lamp are usually used.

For the ultraviolet lamp, UV lamps which emit ultraviolet light having a spectral distribution in the wavelength region of 300 to 400 nm such as a high-pressure mercury lamp, a Fusion H lamp and a xenon lamp are usually used, and an irradiation dose of 50 to 3,000 mJ/cm$^2$ is usually preferred.

As the ionizing radiation curable compounds, unsaturated monomers, oligomers or resins , compositions containing these are preferred. More specifically, polyfunctional, ionizing radiation-curable acrylic compounds having two or more functional groups such as polyfunctional (meth)acrylates, urethane (meth)acrylates and polyester (meth)acrylates are more preferred, and polyfunctional (meth)acrylates and urethane (meth)acrylates are particularly preferred.

Examples of polyfunctional (meth)acrylates include ethylene glycol di(meth)acrylate, propylene glycol di(meth)acrylate, butylene glycol di(meth)acrylate, neopentyl glycol di(meth)acrylate, hexanediol di(meth)acrylate, trimethylol ethane tri(meth)acrylate, trimethylolpropane tri(meth)acrylate, pentaerythritol tri(meth)acrylate, pentaerythritol tetra (meth)acrylate, dipentaerythritol penta(meth)acrylate, dipentaerythritol hexa(meth)acrylate, glycerol tri(meth)acrylate, triallyl (meth)acrylate and bisphenol A ethylene oxide modified di(meth)acrylate.

Urethane (meth)acrylates can be obtained, for example, through an esterification reaction between the hydroxyl groups of the polyurethane oligomers obtained by reacting polyether polyols or polyester polyols with polyisocyanates and (meth)acrylic acid.

Polyester (meth)acrylates can be obtained, for example, through an esterification of the hydroxyl groups of the polyester oligomers having hydroxyl groups at both ends that are obtained by condensation of polycarboxylic acids and polyhydric alcohols with (meth)acrylic acid, or through an esterification of the hydroxyl groups at the terminal of the oligomers obtained by adding an alkylene oxide to a polycarboxylic acid with (meth)acrylic acid.

Either one type of ionizing radiation curable compound may be used alone, or two or more types thereof may be used in combination.

Fillers such as silica (including colloidal silica), silicone powders, mica, glass beads, acrylic fine powders and hollow particles may be incorporated in the curable composition.

In addition, additional components such as light stabilizers, ultraviolet absorbers, catalysts, colorants, antistatic agents, lubricants, leveling agents, defoamers, polymerization accelerators, antioxidants, flame retardants, infrared absorbing agents, surfactants and surface modifiers may be optionally included in the curable composition.

The aforementioned HC film has a low polarity surface as described above, and may become an adhesion target for the adhesive sheet of the present invention.

The adhesive sheet of the present invention is capable of maintaining a sufficient level of adhesion strength even under high temperature environments and also capable of suppressing the foaming that occurs at the interface between the adhesive composition and a resin plate when being adhered to the resin plate, and is therefore suitable for use in high temperature environments.

The adhesive sheet of the present invention is capable of maintaining a sufficient level of adhesion strength even under high temperature environments and also capable of suppressing the changes in the optical properties after the durability test, while achieving a sufficient level of adhesion strength to an adherend regardless of the degree of the surface polarity thereof.

With respect to the adhesive sheet of the present invention, the haze value from immediately after the recovery from a high temperature and high humidity environment to three hours afterwards is preferably different from the haze value (initial value) before being stored in the high temperature and high humidity environment by 0 to 1.5%, more preferably by 0 to 1.0%, and particularly preferably by zero, in other words, be the same value as the initial value.

In addition, the adhesive sheet of the present invention can be suitably used as a component of touch panels, because it does not increase the electrical resistivity of a transparent conductive film serving as an adhesion target even under high temperature and high humidity environments, even when used by being adhered to a transparent conductive film, such as an ITO (Indium Tin Oxide) film.

With respect to the adhesive sheet of the present invention, the rate of change in the resistance which is measured after being stored under conditions of high temperature and high humidity environment as described in Examples is preferably 0 to 30%, more preferably 0 to 20%, and particularly preferably 0 to 10%.

With respect to the touch panels, there are resistive-, surface acoustic wave type-, infrared-, electromagnetic induction type-, and electrostatic capacitance type-touch panels, and the like. An electrostatic capacitance type-touch panel is a system to operate the device by detecting changes in the electrical capacitance when touching the screen or the like, and the display device calculates and processes the weak changes in the electric current flowing through the four corners of a transparent conductive film to detect a contact position.

From such a principle, in an electrostatic capacitance type-touch panel, a slight change in the electrical resistivity of a transparent conductive film may lead to the reduction of precision, which may cause a device failure as a result.

It is particularly preferable to use the adhesive sheet of the present invention as a component in an electrostatic capacitance type-touch panel, since it does not increase the electrical resistivity of the transparent conductive film serving as an adhesion target even in an environment of high temperature and high humidity.

Although there are surface capacitance type- and projected capacitance type-touch panels, the adhesive sheet of the present invention may be used for both types.

[Examples]

A more detailed description of the present invention is presented below based on a series of Examples and Comparative Examples, although the present invention is in no way limited by the following examples.

(Example 1)

100 parts by weight of an acrylic copolymer composed of 2-ethylhexyl acrylate (2EHA), cyclohexyl acrylate (CHA), 2-hydroxyethyl acrylate (HEA) and dimethylaminoethyl acrylate (DMAEA) (2EHA/CHA/HEA/DMAEA = 59.5/40/0.3/0.2, having a weight average molecular weight of 600,000) were mixed with 0.5 parts by weight of a crosslinking agent (tolylene diisocyanate-based crosslinking agent manufactured by Nippon Polyurethane Industry Co., Ltd. under the product name "Coronate L", having a solid content of 75%) (so that a solid content of 0.375 parts by weight was added relative to 100 parts by weight of acrylic copolymer in terms of solid content) and the resulting mixture was diluted with methyl ethyl ketone, thereby preparing an adhesive composition coating solution having a nonvolatile content of 30%.

This adhesive composition coating solution was coated on a release-treated surface of a release sheet of high release force type (manufactured by Lintec Corporation under the product name "SP-PET 381031H" having a film thickness of 38 $\mu$m) using a knife coater so that the resulting coating had a thickness of 25 $\mu$m after drying, and the resultant was then dried for about 1 minute at 90°C to form an adhesive layer.

The release-treated surface of a release sheet of low release force type (manufactured by Lintec Corporation under the product name "SP-PET 381031" having a thickness of 38 $\mu$m) was laminated on this adhesive layer, thereby preparing a double-sided adhesive sheet without a substrate in which the adhesive layer was sandwiched by two pieces of release films.

Furthermore, a polyethylene terephthalate film (manufactured by Toyobo Co., Ltd. under the product name "Cosmo Shine A4100" having a thickness of 100 $\mu$m) serving as a substrate was adhered to an adhesive surface exposed by removing the light release film from the double-sided adhesive sheet without a substrate, thereby forming a single-sided adhesive sheet with a substrate.

(Example 2)

A double-sided adhesive sheet without a substrate and a single-sided adhesive sheet with a substrate were prepared in the same manner as in Example 1 with the exception that an acrylic copolymer (composed of 2EHA/CHA/HEA/DMAEA = 44.5/55/0.3/0.2) having a weight average molecular weight of 800,000 was used.

(Example 3)

A double-sided adhesive sheet without a substrate and a single-sided adhesive sheet with a substrate were prepared in the same manner as in Example 1 with the exception that an acrylic copolymer (composed of 2EHA/CHA/HEA/DMAEA = 69.5/30/0.3/0.2) having a weight average molecular weight of 800,000 was used.

(Example 4)

A double-sided adhesive sheet without a substrate and a single-sided adhesive sheet with a substrate were prepared in the same manner as in Example 1 with the exception that an acrylic copolymer (composed of 2EHA/CHA/HEA/DMAEA = 58.7/40/1/0.2) having a weight average molecular weight of 800,000 was used.

(Comparative Example 1)

A double-sided adhesive sheet without a substrate and a single-sided adhesive sheet with a substrate were prepared in the same manner as in Example 1 with the exception that an acrylic copolymer (composed of 2EHA/CHA/HEA = 59.7/40/0.3) having a weight average molecular weight of 800,000 was used.

(Comparative Example 2)

A double-sided adhesive sheet without a substrate and a single-sided adhesive sheet with a substrate were prepared in the same manner as in Example 1 with the exception that an acrylic copolymer (composed of 2EHA/CHA/HEA/AAm = 59.2/40/0.3/0.5) having a weight average molecular weight of 800,000 was used. Note that AAm stands for acrylamide.

(Comparative Example 3)

A double-sided adhesive sheet without a substrate and a single-sided adhesive sheet with a substrate were prepared in the same manner as in Example 1 with the exception that an acrylic copolymer (composed of 2EHA/CHA/HEA/DMAEA = 83.8/15/1/0.2) having a weight average molecular weight of 800,000 was used.

(Comparative Example 4)

A double-sided adhesive sheet without a substrate and a single-sided adhesive sheet with a substrate were prepared in the same manner as in Example 1 with the exception that an acrylic copolymer (composed of BA/CHA/HEA/DMAEA = 73.8/25/1/0.2) having a weight average molecular weight of 800,000 was used. Note that BA stands for butyl acrylate.

(Example 5)

100 parts by weight of an acrylic copolymer composed of 2-ethylhexyl acrylate (2EHA), cyclohexyl acrylate (CHA), 2-hydroxyethyl acrylate (HEA) and dimethylaminoethyl acrylate (DMAEA) (2EHA/CHA/HEA/DMAEA = 44.5/55/0.3/0.2, having a weight average molecular weight of 800,000) were mixed with 0.6 parts by weight of a crosslinking agent (tolylene diisocyanate-based crosslinking agent manufactured by Nippon Polyurethane Industry Co., Ltd. under the product name "Coronate L", having a solid content of 75%) (so that a solid content of 0.45 parts by weight was added relative to 100 parts by weight of acrylic copolymer in terms of solid content) and the resulting mixture was diluted with methyl ethyl ketone, thereby preparing an adhesive composition coating solution having a nonvolatile content of 30%.
This adhesive composition coating solution was coated on a release-treated surface of a release sheet of high release force type (manufactured by Lintec Corporation under the product name "SP-PET 382050" having a thickness of 38 $\mu$m) using a knife coater so that the resulting coating had a thickness of 25 $\mu$m after drying, and the resultant was then dried for about 1 minute at 90°C to form an adhesive layer.

The release-treated surface of a release sheet of low release force type (manufactured by Lintec Corporation under the product name "SP-PET 381031" having a thickness of 38 µm) was laminated on this adhesive layer, thereby preparing a double-sided adhesive sheet without a substrate in which the adhesive layer was sandwiched by two pieces of release films.

In addition, the surface of a polyethylene terephthalate film (manufactured by Toyobo Co., Ltd. under the product name "Cosmo Shine A4100" having a thickness of 100 µm) serving as a substrate which was subjected to an easy-adhesion treatment was adhered to an adhesive surface exposed by removing the release sheet of low release force type from the double-sided adhesive sheet without a substrate, thereby forming a single-sided adhesive sheet with a substrate.

(Example 6)

A double-sided adhesive sheet without a substrate and a single-sided adhesive sheet with a substrate were prepared in the same manner as in Example 5 with the exception that an acrylic copolymer (composed of 2EHA/CHA/HEA/DMAEA = 59.5/40/0.3/0.2) having a weight average molecular weight of 800,000 was used.

(Example 7)

A double-sided adhesive sheet without a substrate and a single-sided adhesive sheet with a substrate were prepared in the same manner as in Example 5 with the exception that an acrylic copolymer (composed of 2EHA/CHA/HEA/DMAEA = 59.5/40/0.3/0.2) having a weight average molecular weight of 1,000,000 was used.

(Example 8)

A double-sided adhesive sheet without a substrate and a single-sided adhesive sheet with a substrate were prepared in the same manner as in Example 5 with the exception that 100 parts by weight of an acrylic copolymer (composed of 2EHA/CHA/HEA/DMAEA = 59.5/40/0.3/0.2) having a weight average molecular weight of 500,000 were mixed with 0.13 parts by weight of a crosslinking agent (tolylene diisocyanate-based crosslinking agent manufactured by Nippon Polyurethane Industry Co., Ltd. under the product name "Coronate L", having a solid content of 75%) (so that a solid content of 0.098 parts by weight was added relative to 100 parts by weight of acrylic copolymer in terms of solid content).

(Example 9)

A double-sided adhesive sheet without a substrate and a single-sided adhesive sheet with a substrate were prepared in the same manner as in Example 8 with the exception that an acrylic copolymer (composed of 2EHA/CHA/HEA/DMAEA = 59.5/40/0.3/0.2) having a weight average molecular weight of 800,000 was used.

(Comparative Example 5)

A double-sided adhesive sheet without a substrate and a single-sided adhesive sheet with a substrate were prepared in the same manner as in Example 5 with the exception that 100 parts by weight of an acrylic copolymer solution prepared by diluting the acrylic copolymer composed of butyl acrylate (BA), methyl acrylate (MA) and acrylic acid (AAc) (BA/MA/AAc = 77/20/3, having a weight average molecular weight of 800,000) with toluene and having a nonvolatile content of 28% were mixed with 0.9 parts by weight of a crosslinking agent (tolylene diisocyanate-based crosslinking agent manufactured by Nippon Polyurethane Industry Co., Ltd. under the product name "Coronate L", having a solid content of 75%) (so that a solid content of 2.41 parts by weight was added relative to 100 parts by weight of acrylic copolymer in terms of solid content) and 1.8 parts by weight of an aluminum chelate-based crosslinking agent (aluminum chelate-based crosslinking agent manufactured by Soken Chemical & Engineering Co., Ltd. under the product name "M-5A", having a solid content of 4.95%) (so that a solid content of 0.32 parts by weight was added relative to 100 parts by weight of acrylic copolymer in terms of solid content).

(Comparative Example 6)

A double-sided adhesive sheet without a substrate and a single-sided adhesive sheet with a substrate were prepared in the same manner as in Example 5 with the exception that 100 parts by weight of an acrylic copolymer solution prepared by diluting the acrylic copolymer (composed of BA/AAc = 95/5, having a weight average molecular weight of 1,000,000) with toluene and having a nonvolatile content of 20% were mixed with 10 parts by weight of an acrylic copolymer solution prepared by diluting the acrylic copolymer composed of methyl methacrylate (MMA) and dimethylaminoethyl methacrylate (DMAEMA) (MMA/DMAEMA = 95/5, having a weight average molecular weight of 20,000) with toluene and having a nonvolatile content of 45% and 4 parts by weight of an aluminum chelate-based crosslinking agent (aluminum chelate-based crosslinking agent manufactured by Soken Chemical & Engineering Co., Ltd. under the product name "M-5A", having a solid content of 4.95%) (so that a solid content of 0.99 parts by weight was added relative to 100 parts by weight of acrylic copolymer in terms of solid content).

(Comparative Example 7)

A double-sided adhesive sheet without a substrate and a single-sided adhesive sheet with a substrate were prepared in the same manner as in Example 5 with the exception that 100 parts by weight of an acrylic copolymer solution prepared by diluting the acrylic copolymer (composed of BA/MMA/AAc = 95/3/2, having a weight average molecular weight of 500,000) with toluene and having a nonvolatile content of 30% were mixed with 30 parts by weight of a tackifier (manufactured by Arakawa Chemical Industries, Ltd. under the product name "Pine Crystal KE-359") and 0.5 parts by weight of a crosslinking agent (tolylene diisocyanate-based crosslinking agent manufactured by Nippon Polyurethane Industry Co., Ltd. under the product name "Coronate L", having a solid content of 75%) (so that a solid content of 0.013 parts by weight was added relative to 100 parts by weight of acrylic copolymer in terms of solid content).

(Example 10)

100 parts by weight of an acrylic copolymer composed of 2-ethylhexyl acrylate (2EHA), cyclohexyl acrylate (CHA), 2-hydroxyethyl acrylate (HEA) and dimethylaminoethyl acrylate (DMAEA) (2EHA/CHA/HEA/DMAEA = 56.8/40/3/0.2 (% by weight), having a weight average molecular weight of 800,000 and a solid content of 40% by weight) were mixed with 0.5 parts by weight of a tolylene diisocyanate-based crosslinking agent (manufactured by Toyo Ink Co., Ltd. under the product name "Oribain BHS8515", having a solid content of 37.5% by weight) (so that a solid content of 0.47 parts by weight was added relative to 100 parts by weight of acrylic copolymer in terms of solid content) to prepare an adhesive composition coating solution.
This adhesive composition coating solution was coated on a release-treated surface of a release sheet of high release force type (manufactured by Lintec Corporation under the product name "SP-PET 382050" having a thickness of 38 $\mu$m) using a knife coater so that the resulting coating had a thickness of 25 $\mu$m after drying, and the resultant was then dried for about 1 minute at 90°C to form an adhesive layer. The release-treated surface of a release sheet of low release force type (manufactured by Lintec Corporation under the product name "SP-PET 381031" having a thickness of 38 $\mu$m) was laminated on this adhesive layer, thereby preparing a double-sided adhesive sheet without a substrate in which the adhesive layer was sandwiched by two pieces of release films.
In addition, the surface of a polyethylene terephthalate film (manufactured by Toyobo Co., Ltd. under the product name "Cosmo Shine A4100" having a thickness of 100 $\mu$m) serving as a substrate which was subjected to an easy-adhesion treatment was adhered to an adhesive surface exposed by removing the release sheet of low release force type from the double-sided adhesive sheet without a substrate, thereby forming a single-sided adhesive sheet with a substrate.

(Example 11)

A double-sided adhesive sheet without a substrate and a single-sided adhesive sheet with a substrate were prepared in the same manner as in Example 10 with the exception that an acrylic copolymer (composed of 2EHA/CHA/HEA/DMAEA = 54.8/40/5/0.2 (% by weight)) having a weight average molecular weight of 800,000 and a solid content of 40% was used.

(Example 12)

A double-sided adhesive sheet without a substrate and a single-sided adhesive sheet with a substrate were prepared in the same manner as in Example 10 with the exception that an acrylic copolymer (composed of 2EHA/CHA/HEA/DMAEA = 51.8/40/8/0.2 (% by weight)) having a weight average molecular weight of 800,000 and a solid content of 40% was used.

(Example 13)

A double-sided adhesive sheet without a substrate and a single-sided adhesive sheet with a substrate were prepared in the same manner as in Example 10 with the exception that an acrylic copolymer (composed of 2EHA/CHA/HEA/DMAEA = 59.5/40/0.3/0.2) having a weight average molecular weight of 800,000 and a solid content of 40% was used.

(Comparative Example 8)

A double-sided adhesive sheet without a substrate and a single-sided adhesive sheet with a substrate were prepared in the same manner as in Example 10 with the exception that an acrylic copolymer (composed of 2EHA/CHA/HEA/DMAEA = 79.5/20/0.3/0.2) having a weight average molecular weight of 800,000 and a solid content of 40% was used.

(Comparative Example 9)

A double-sided adhesive sheet without a substrate and a single-sided adhesive sheet with a substrate were prepared in the same manner as in Example 10 with the exception that an acrylic copolymer solution was used, in which 100 parts by weight of an acrylic copolymer composed of 2-ethylhexyl acrylate (2EHA), cyclohexyl acrylate (CHA) and acrylic acid (AAc) (2EHA/CHA/AAc = 57/40/3 (% by weight), having a weight average molecular weight of 800,000 and a solid content of 40% by weight) were mixed with 3.3 parts by weight of an aluminum chelate-based crosslinking agent (manufactured by Soken Chemical & Engineering Co., Ltd. under the product name "M-5A", having a solid content of 4.95%) (so that a solid content of 0.41 parts by weight was added relative to 100 parts by weight of acrylic copolymer in terms of solid content).

(Comparative Example 10)

A double-sided adhesive sheet without a substrate and a single-sided adhesive sheet with a substrate were prepared in the same manner as in Example 10 with the exception that an acrylic copolymer solution was used, in which 100 parts by weight of an acrylic copolymer composed of butyl acrylate (BA), methyl acrylate (MA) and acrylic acid (AAc) (BA/MA/AAc = 77/20/3 (% by weight), having a weight average molecular weight of 800,000 and a solid content of 40%) were mixed with 0.9 parts by weight of a tolylene diisocyanate-based crosslinking agent (manufactured by Nippon Polyurethane Industry Co., Ltd. under the product name "Coronate L", having a solid content of 75%) (so that a solid content of 1.69 parts by weight was added relative to 100 parts by weight of acrylic copolymer in terms of solid content) and 1.8 parts by weight of an aluminum chelate-based crosslinking agent (manufactured by Soken Chemical & Engineering Co., Ltd. under the product name "M-5A", having a solid content of 4.95%) (so that a solid content of 0.22 parts by weight was added relative to 100 parts by weight of acrylic copolymer in terms of solid content).

(Comparative Example 11)

100 parts by weight of an acrylic copolymer (composed of 2EHA/CHA/HEA/DMAEA = 44.8/40/12/0.2) having a weight average molecular weight of 800,000 and a solid content of 40% by weight were mixed with 0.5 parts by weight of a tolylene diisocyanate-based crosslinking agent (manufactured by Toyo Ink Co., Ltd. under the product name "Oribain BHS8515", having a solid content of 37.5% by weight) (so that a solid content of 0.47 parts by weight was added relative to 100 parts by weight of acrylic copolymer in terms of solid content) to prepare an adhesive composition coating solution.

(Example 14)

A double-sided adhesive sheet without a substrate and a single-sided adhesive sheet with a substrate were prepared in the same manner as in Example 5 with the exception that an acrylic copolymer composed of isooctyl acrylate (i-OA), cyclohexyl acrylate (CHA), 2-hydroxyethyl acrylate (HEA) and dimethylaminoethyl acrylate (DMAEA) (i-OA/CHA/HEA/DMAEA = 59.5/40/0.3/0.2) and having a weight average molecular weight of 800,000 was used.

(Example 15)

A double-sided adhesive sheet without a substrate and a single-sided adhesive sheet with a substrate were prepared in the same manner as in Example 5 with the exception that an acrylic copolymer composed of n-hexyl acrylate (n-HexA), cyclohexyl acrylate (CHA), 2-hydroxyethyl acrylate (HEA) and dimethylaminoethyl acrylate (DMAEA) (n-HexA/CHA/HEA/DMAEA = 59.5/40/0.3/0.2) and having a weight average molecular weight of 800,000 was used.

(Example 16)

A double-sided adhesive sheet without a substrate and a single-sided adhesive sheet with a substrate were prepared in the same manner as in Example 5 with the exception that an acrylic copolymer composed of 2-ethylhexyl acrylate (2EHA), cyclohexyl acrylate (CHA), 2-hydroxyethyl acrylate (HEA) and dimethylaminopropyl acrylamide (DMAPAA) (2EHA/CHA/HEA/DMAPAA = 59.5/40/0.3/0.2) and having a weight average molecular weight of 800,000 was used.

(Example 17)

A double-sided adhesive sheet without a substrate and a single-sided adhesive sheet with a substrate were prepared in the same manner as in Example 5 with the exception that an acrylic copolymer composed of 2-ethylhexyl acrylate (2EHA), cyclohexyl acrylate (CHA), 2-hydroxyethyl acrylate (HEA) and diethylaminoethyl methacrylate (DEAEMA) (2EHA/CHA/HEA/DEAEMA = 59.5/40/0.3/0.2) and having a weight average molecular weight of 800,000 was used.

(Example 18)

A double-sided adhesive sheet without a substrate and a single-sided adhesive sheet with a substrate were prepared in the same manner as in Example 5 with the exception that 100 parts by weight of an acrylic copolymer composed of 2-ethylhexyl acrylate (2EHA), dicyclopentanyl acrylate (DCPA), 2-hydroxyethyl acrylate (HEA) and dimethylaminoethyl acrylate (DMAEA) (2EHA/DCPA/HEA/DMAEA = 75/24.5/0.3/0.2) having a weight average molecular weight of 800,000 were mixed with 0.13 parts by weight of a crosslinking agent (tolylene diisocyanate-based crosslinking agent manufactured by Nippon Polyurethane Industry Co., Ltd. under the product name "Coronate L", having a solid content of 75%) (so that a solid content of 0.0975 parts by weight was added relative to 100 parts by weight of acrylic copolymer in terms of solid content).

(Example 19)

A double-sided adhesive sheet without a substrate and a single-sided adhesive sheet with a substrate were prepared in the same manner as in Example 5 with the exception that 100 parts by weight of an acrylic copolymer composed of 2-ethylhexyl acrylate (2EHA), isobornyl acrylate (IBXA), 2-hydroxyethyl acrylate (HEA) and dimethylaminoethyl acrylate (DMAEA) (2EHA/IBXA/HEA/DMAEA = 73.5/26/0.3/0.2) having a weight average molecular weight of 800,000 were mixed with 0.13 parts by weight of a crosslinking agent (tolylene diisocyanate-based crosslinking agent manufactured by Nippon Polyurethane Industry Co., Ltd. under the product name "Coronate L", having a solid content of 75%) (so that a solid content of 0.0975 parts by weight was added relative to 100 parts by weight of acrylic copolymer in terms of solid content).

(Example 20)

A double-sided adhesive sheet without a substrate and a single-sided adhesive sheet with a substrate were prepared in the same manner as in Example 5 with the exception that 100 parts by weight of an acrylic copolymer composed of 2-ethylhexyl acrylate (2EHA), cyclohexyl acrylate (CHA), 2-hydroxyethyl acrylate (HEA) and dimethylaminoethyl acrylate (DMAEA) (2EHA/CHA/HEA/DMAEA = 59.65/40/0.3/0.05, having a weight average molecular weight of 800,000) were mixed with 0.5 parts by weight of a crosslinking agent (tolylene diisocyanate-based crosslinking agent manufactured by Nippon Polyurethane Industry Co., Ltd. under the product name "Coronate L", having a solid content of 75%) (so that a solid content of 0.375 parts by weight was added relative to 100 parts by weight of acrylic copolymer in terms of solid content).
The properties of the adhesive sheets obtained in the respective Examples and Comparative Examples were measured by the following test methods, and the results are shown in Table 1.

(1) Gel content

The double-sided adhesive sheets without a substrate obtained in each of the above Examples and Comparative Examples were left to stand for one week from immediately after the coating, either under conditions of 23°C and a relative humidity of 50% or under a condition of 40°C. Then, the weight of the adhesive composition was measured by only removing the release sheet from the adhesive layer, and subsequently, extraction was carried out by refluxing with ethyl acetate for about 16 hours using a Soxhlet extractor.
After air-drying the undissolved components, the resultant was dried for 10 hours at 100°C and then left to stand for three hours under conditions of 23 °C and a relative humidity of 50% for humidity conditioning. Thereafter, the weight thereof was measured to calculate the gel content using the following equation.
Gel content (% by weight) = (weight of undissolved components after drying and humidity conditioning / weight of adhesive composition prior to extraction) x 100

(2) Storage elastic modulus at 80˚C

The release sheets of the double-sided adhesive sheets without a substrate obtained in each of the above Examples and Comparative Examples were removed, and several of the resulting pieces were superimposed to form a sheet sample having a thickness of 3.0 mm.
A test piece constituted of a cylindrical adhesive layer having a diameter of 8 mm and a thickness of 3 mm was prepared from the formed sheet sample, and the storage elastic modulus at 80˚C was measured by a torsional shearing method at a measurement frequency of 1 Hz, using a viscoelasticity measuring apparatus (manufactured by Rheometric Scientific F.E. Ltd. under the product name "DYNAMIC ANALYZER RDAII").

(3) Adhesion strength at 23˚C

An HC film (manufactured by Lintec Corporation under the product name "CHC-PET188N1E1", an HC film having HC layers on both sides (indicated as E1 side and N1 side) in which a contact angle for water of the E1 side was 80˚), and a glass plate (manufactured by NSG Precision Co., Ltd. under the product name "Corning glass Eagle XG", having a contact angle for water of 30˚) were prepared as adherends.
The single-sided adhesive sheets with a substrate obtained in each of the above Examples and Comparative Examples were cut into 25 mm × 250 mm pieces, and the surfaces of the adhesive layers exposed by removing the release sheets under the conditions of 23˚C and a relative humidity of 50% were each adhered to the aforementioned adherends (adhered to the E1 side in the cases of HC films).
Then, the single-sided adhesive sheets with a substrate which were adhered to the HC films were allowed to stand for 24 hours under the conditions of 23˚C and a relative humidity of 50%. Thereafter, under the same conditions, the adhesion strength at 23˚C was measured as a value (N/25 mm) measured at a peel rate of 300 mm/min and a peel angle of 180˚ in accordance with JIS Z 0237 using a tensile testing machine (manufactured by Orientec Co., Ltd. under the product name "Tensilon").

(4) Adhesion strength at 60˚C

Using the single-sided adhesive sheets with a substrate which were used in the above measurement for the adhesion strength at 23˚C and cut into 25 mm × 250 mm pieces, the surfaces of the adhesive layers exposed by removing the release sheets under the conditions of 23˚C and a relative humidity of 50% were adhered to the E1 side of HC films in the same manner as described above.
Then, the single-sided adhesive sheets with a substrate which were adhered to the HC films were allowed to stand for 24 hours under the conditions of 23˚C and a relative humidity of 50%, and then allowed to stand for one hour under a condition of 60˚C. Thereafter, under the same conditions, the adhesion strength at 60˚C was measured as a value (N/25 mm) measured at a peel rate of 300 mm/min and a peel angle of 180˚ in accordance with JIS Z 0237 using a tensile testing machine (manufactured by Orientec Co., Ltd. under the product name "Tensilon").

(5) Durability (presence of foaming)

The release sheet of low releasing force type of the double-sided adhesive sheets without a substrate obtained in each of the above Examples and Comparative Examples were removed, and the resultants were adhered to the aforementioned HC films.
Subsequently, the surfaces of the adhesive layers exposed by removing the release sheet of high releasing force type were adhered to a polycarbonate resin plate (manufactured by Mitsubishi Gas Chemical Company, Inc. under the product name "Iupilon Sheet NF-2000"). The resultants were stored in an environment of 80˚C for 250 hours and were then evaluated based on the following criteria by confirming the presence of foaming therein.
○: Impossible to confirm the location of foaming.
Δ: The location of foaming that was at least 0.1 mm and less than 1 mm was confirmed.
×: The location of foaming that was at least 1 mm was confirmed.
-: Not evaluated.
The results of the tests in the respective Examples and Comparative Examples regarding the above evaluations are summarized and shown in Table 1.

(6) Resistance change rate

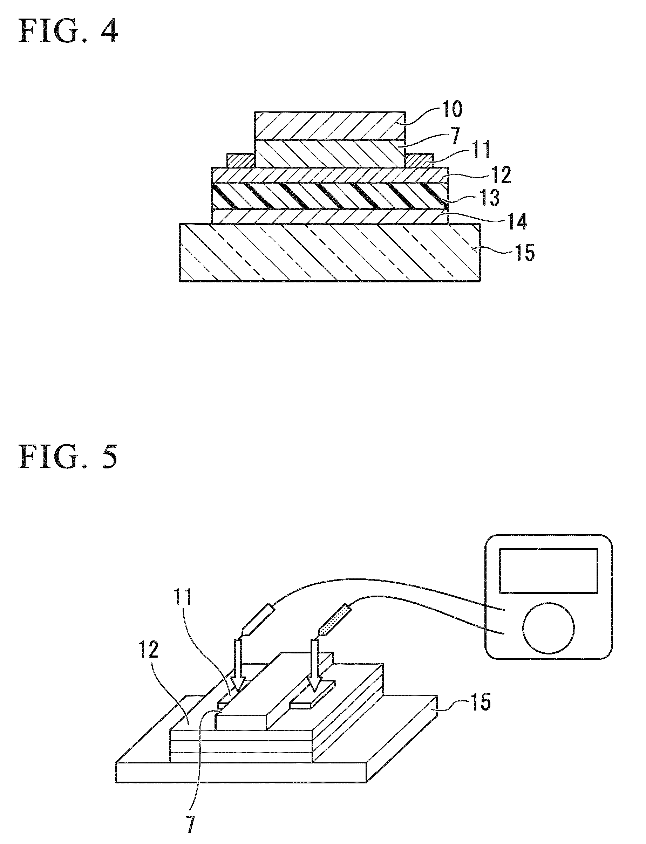

Using FIG. 4, a sample for resistance measurement used in a test for measuring the electrical resistance will be described.

A polyethylene terephthalate film 13 provided on the surface of an ITO film 12 by sputtering was prepared, and a glass plate 15 was bonded to the polyethylene terephthalate film 13, on the side where the ITO film 12 was not provided, via a bonding tape 14 (manufactured by Lintec Corporation under the product name "Tackliner TL-70"). Subsequently, a conductive resin material containing silver (Dotite for a touch panel circuit type, manufactured by Fujikura Kasei Co., Ltd. under the product name "FA-301CA") was coated on the surface of the ITO film 12, and the resultant was heated and dried for 20 minutes at 80˚C to prepare two electrodes 11 which were to become the resistance measurement points. During this process, the positions of these two points were adjusted so that the distance therebetween was 2 cm. Then, the release sheet of low releasing force type of the double-sided adhesive sheets without a substrate obtained in each of the above Examples and Comparative Examples were removed, and a polyethylene terephthalate film (manufactured by Toyobo Co., Ltd. under the product name "Cosmo Shine A4100" having a thickness of 50 $\mu$m) serving as a substrate 10 was adhered thereto to prepare a single-sided adhesive sheet with a substrate film in the present invention. The obtained single-sided adhesive sheets with a substrate film were cut into a size of 20 mm $\times$ 250 mm, and the release sheet of high releasing force type of the single-sided adhesive sheets with a substrate film were removed. The resultant was adhered to the sputtering surface of the ITO film 12 so that an adhesive layer 7 was aligned along the two electrodes 11 (in close proximity to, but not to contact the electrodes), thereby preparing the sample for resistance measurement depicted in FIG. 4.

Next, as shown in FIG. 5, the initial resistance value R0 between the electrodes 11 was measured using a "Digital High Tester 3802-50" (manufactured by Hioki E.E. Corporation).

Each of the samples for resistance measurement was allowed to stand for 240 hours under conditions of a temperature of 80˚C and a humidity of 90%, and the resistance values R following the accelerated hygrothermal process were measured.

The resistance change rate was calculated by the following equation.

$$\text{Resistance change rate } (\%) = \{(R - R0) / R0\} \times 100$$

(7) Haze value

The release sheet of low releasing force type of the double-sided adhesive sheets without a substrate obtained in each of the above Examples and Comparative Examples were removed, and HC films (manufactured by Lintec Corporation under the product name "CHC-PET188N1E1" in which a contact angle for water of the E1 side was 80˚) were adhered thereto.

Subsequently, the surfaces of the adhesive layers exposed by removing the release sheet of high releasing force type were adhered to a glass plate (manufactured by U-kou Co., Ltd. under the product name "Float Plate Glass"), and the initial haze value was measured in accordance with JIS K7136 using a haze meter (manufactured by Nippon Denshoku Industries Co., Ltd. under the product name "NDH-2000").

Then, the resultants were stored under the conditions of 80˚C and a relative humidity of 90% for 240 hours and were then recovered under the conditions of 23˚C and a relative humidity of 50%, and the haze value was measured with time from immediately after the recovery.

The results of the resistance change rate and haze value are summarized and shown in Table 2.

[Table 1]

| | Mw | Adhesive pro Adhesive properties | | | Performance evaluation | | | |
|---|---|---|---|---|---|---|---|---|
| | | Gel content (%) | Gel content after 7 days of drying at 40˚C | Storage elastic modulus at 80˚C (Pa) | Adhesive strength at 23˚C (N/25 mm) | | Adhesive strength at 60˚C (N/25 mm) | Durability |
| | | | | | To HC | To glass | To HC | |
| Ex. 1 | 600,000 | 71 | 73 | - | 15 | 20 | - | ○ |
| Ex. 2 | 800,000 | 70 | 72 | - | 13 | 19 | - | ○ |
| Ex. 3 | 800,000 | 72 | 75 | - | 10 | 12 | - | - |
| Ex. 4 | 800,000 | 74 | 76 | - | 14 | 21 | - | ○ |

(continued)

| | Mw | Adhesive pro Adhesive properties | | | Performance evaluation | | | |
|---|---|---|---|---|---|---|---|---|
| | | Gel content (%) | Gel content after 7 days of drying at 40˚C | Storage elastic modulus at 80˚C (Pa) | Adhesive strength at 23˚C (N/25 mm) | | Adhesive strength at 60˚C (N/25 mm) | Durability |
| | | | | | To HC | To glass | To HC | |
| Ex. 5 | 800,000 | 82 | 83 | 50,000 | 16.5 | 20.0 | 12.5 | ○ |
| Ex. 6 | 800,000 | 80 | 81 | 40,000 | 12.5 | 20.0 | 9.0 | ○ |
| Ex. 7 | 1,000,000 | 82 | 81 | 42,000 | 12.0 | 16.0 | 9.0 | ○ |
| Ex. 8 | 500,000 | 39 | 42 | 14,000 | 16.3 | 21.3 | 10.8 | × |
| Ex. 9 | 800,000 | 47 | 49 | 19,000 | 15.2 | 20.5 | 10.0 | × |
| Ex. 10 | 800,000 | 89 | 90 | - | 16.5 | 20.0 | - | ○ |
| Ex. 11 | 800,000 | 89 | 90 | - | 18.0 | 24.0 | - | ○ |
| Ex. 12 | 800,000 | - | - | - | 10.5 | 18.0 | - | ○ |
| Ex. 13 | 800,000 | 80 | 81 | - | 12.5 | 20.0 | - | ○ |
| Ex. 14 | 800,000 | 73 | 71 | 23,000 | 17.6 | 14.4 | 7.0 | ○ |
| Ex. 15 | 800,000 | 75 | 76 | 24,500 | 12.6 | 15.0 | 7.0 | ○ |
| Ex. 16 | 800,000 | 82 | 83 | 30,550 | 16.0 | 18.3 | 9.0 | ○ |
| Ex. 17 | 800,000 | 77 | 79 | 27,800 | 16.5 | 18.0 | 8.5 | ○ |
| Ex. 18 | 800,000 | 61 | 64 | - | 13.3 | 11.0 | 10.0 | ○ |
| Ex. 19 | 800,000 | 61 | 64 | 9,200 | 14.0 | 10.4 | 9.5 | ○ |
| Ex. 20 | 800,000 | 70 | 73 | - | 14.5 | 19.5 | - | ○ |
| Comp. Ex. 1 | 800,000 | 10 | 50 | - | 15 | 30 Cf | - | - |
| Comp. Ex. 2 2 | 800,000 | 72 | 72 | - | 6 | 22 | - | - |
| Comp. Ex. 3 | 800,000 | 71 | 72 | - | 4 | 4 | - | × |
| Comp. Ex. 4 | 800,000 | 70 | 72 | - | 6 | 7 | - | × |
| Comp. Ex. 5 | 800,000 | 83 | 84 | 102,000 | 2.2 | 20.2 | 0.8 | × |
| Comp. Ex. 6 | 800,000 | 74 | 77 | 95,800 | 1.4 | 13.5 | 3.5 | Δ |
| Comp. Ex. 7 | 500,000 | 33 | 31 | 15,000 | 8.2 | 19.8 | 4.0 | × |
| Comp. Ex. 8 | 800,000 | 79 | 79 | - | 4.5 | 3.5 | - | × |
| Comp. Ex. 9 | 800,000 | 70 | 70 | - | 15.0 | 23.5 | - | ○ |
| Comp. Ex. 10 | 800,000 | 83 | 84 | 102,000 | 2.0 | 24.0 | 0.8 | × |

(continued)

| | Mw | Adhesive pro Adhesive properties | | | Performance evaluation | | | |
| | | Gel content (%) | Gel content after 7 days of drying at 40˚C | Storage elastic modulus at 80˚C (Pa) | Adhesive strength at 23˚C (N/25 mm) | | Adhesive strength at 60˚C (N/25 mm) | Durability |
| | | | | | To HC | To glass | To HC | |
| Comp. Ex. 11 | 800,000 | - | - | - | - | - | - | - |
| Cf: Cohesion failure | | | | | | | | |

[Table 2]

| | Resistance change rate (%) | | Haze value (%) after 240 hours under 80˚C/ 90% RH | | | | | |
| | Dried at 80˚C | 80˚C/ 90% RH | Initial value | Immediately after | After 1 hour | After 3 hours | After 10 hours | After 24 hours |
| Ex. 10 | 6.1 | 17.3 | 0.9 | 1.6 | 1.5 | 1.2 | 1.0 | 0.9 |
| Ex. 11 | 10.6 | 19.0 | 0.9 | 1.3 | 1.2 | 1.0 | 1.0 | 1.0 |
| Ex. 12 | 11.2 | 12.8 | 1.0 | 1.9 | 1.8 | 1.8 | 1.2 | 1.1 |
| Ex. 13 | 4.7 | 10.0 | 0.9 | 6.3 | 5.0 | 3.1 | 1.0 | 1.0 |
| Comp. Ex. 8 | 3.4 | 11.0 | 1.0 | 3.1 | 2.9 | 2.7 | 1.1 | 1.1 |
| Comp. Ex. 9 | 106.9 | 49.6 | 1.0 | 1.2 | 1.2 | 1.0 | 1.0 | 1.0 |
| Comp. Ex. 10 | 29.0 | 52.1 | 0.9 | 1.7 | 1.3 | 1.2 | 1.0 | 1.0 |
| Comp. Ex. 11 | - | - | - | - | - | - | - | - |

As shown in Table 1, with respect to the adhesive sheets using the adhesive compositions obtained in Examples, in particular, the adhesive sheets obtained in Examples 1 to 20, the crosslinking reaction with a crosslinking agent was allowed to proceed smoothly, and the time for stabilizing an adhesive composition could be shortened without the use of heavy metals whose adverse impacts on the environment were concerned, while achieving a sufficient level of adhesion strength to an adherend regardless of the degree of the surface polarity thereof.

In addition, with respect to the adhesive sheets using the adhesive compositions obtained in Examples, in particular, the adhesive sheets obtained in Examples 5 to 9 and 14 to 19, it was confirmed that a sufficient level of adhesion strength was achieved even under high temperature environments, and it was also possible to suppress the foaming occurring at the interface with the adhesive composition when being adhered to a resin plate.

Moreover, with respect to the adhesive sheets of Examples 10 to 12, even when adhered to the ITO film, change in the resistance of the ITO film was not greater than 20%, which was less likely to degrade the ITO film. Furthermore, with respect to the adhesive sheets of Examples 10 to 12, the haze values after the durability test under high temperature and high humidity environments which were measured immediately after the collection, after 1 hour or after 3 hours each exhibited the difference from the initial value of less than 1.5, indicating only a small increase in the haze values and minimal deterioration of the optical properties after the durability test.

On the other hand, with respect to the adhesive sheet of Comparative Example 8, a large increase in the haze value after the durability test under a high temperature and high humidity environment was observed, and it took three hours or more before the haze value returned to the same level as the initial value after the recovery from the high temperature and high humidity environment.

Further, a sufficient level of adhesion strength to the HC film was not achieved in Comparative Examples 8 and 10, and change in the resistance of the ITO film was at least 20% in Comparative Examples 9 and 10 when being adhered to the ITO film, which confirmed the degradation of the ITO film.

In addition, the adhesive composition coating solution in Comparative Example 11 gelled during the preparation thereof and could not be coated.

[Industrial Applicability]

According to the present invention, (1) it is possible to provide an adhesive composition and an adhesive sheet capable of allowing the crosslinking reaction with a crosslinking agent to proceed smoothly and also shortening the seasoning period without the use of heavy metals whose adverse impacts on the environment are of concern, while achieving a sufficient level of adhesion strength to an adherend regardless of the degree of the surface polarity thereof; and also, (2) it is possible to provide an adhesive composition and an adhesive sheet capable of maintaining a sufficient level of adhesion strength even under high temperature environments and also suppressing the foaming that occurs at the interface with the adhesive composition when being adhered to a resin plate, while achieving a sufficient level of adhesion strength to an adherend regardless of the degree of the surface polarity thereof;

and also, (3) it is possible to provide an adhesive composition and an adhesive sheet capable of maintaining a sufficient level of adhesion strength even under high temperature environments and also suppressing the changes in the optical properties after the durability test, while achieving a sufficient level of adhesion strength to an adherend regardless of the degree of the surface polarity thereof.

The adhesive composition and adhesive sheet of the present invention are suitable for applications such as the adhesive sheets used for internal fixation in mobile information terminals.

[Reference Signs List]

7: Adhesive layer
8: Release sheet
10: Substrate
11: Electrode
12: ITO film
13: Polyethylene terephthalate film
14: Bonding tape
15: Glass plate

**Claims**

1. An adhesive composition comprising:

   an acrylic copolymer (A) containing

      30 to 77% by weight of a structural unit (a1) derived from an alkyl acrylate monomer in which an alkyl group has 5 to 20 carbon atoms;
      20 to 60% by weight of a structural unit (a2) derived from an alicyclic group-containing (meth)acrylate monomer;
      0.01 to 5% by weight of a structural unit (a3) derived from a tertiary amino group-containing monomer that is derived from (meth)acrylic acid; and
      0.1 to 10% by weight of a structural unit (a4) derived from a monomer containing a functional group excluding tertiary amino groups; and
      a crosslinking agent (B).

2. The adhesive composition according to Claim 1, wherein said alkyl acrylate monomer is at least one member selected from 2-ethylhexyl acrylate, isooctyl acrylate and n-hexyl acrylate.

3. The adhesive composition according to Claim 1 or 2,
   wherein said alicyclic group-containing (meth)acrylate monomer is at least one member selected from cyclohexyl (meth)acrylate, dicyclopentanyl (meth)acrylate and isobornyl (meth)acrylate.

4. The adhesive composition according to any one of Claims 1 to 3,
   wherein said tertiary amino group-containing monomer that is derived from (meth)acrylic acid is at least one member selected from dimethylaminoethyl (meth)acrylate, dimethylaminopropyl (meth)acrylamide and diethylaminoethyl (meth)acrylate.

5. The adhesive composition according to any one of Claims 1 to 4,
   wherein said monomer containing a functional group excluding tertiary amino groups is a hydroxyl group-containing (meth)acrylate monomer.

6. An adhesive sheet comprising a release sheet laminated on both sides of an adhesive layer composed of the adhesive composition according to any one of Claims 1 to 5.

7. An adhesive sheet comprising an adhesive layer composed of the adhesive composition according to any one of Claims 1 to 5 on at least one side of a substrate.

8. The adhesive sheet according to Claim 6 or 7 which can be adhered to both low polarity surfaces of a hard coat film having a contact angle for water at 25°C from 72° to 120°, and surfaces of a polar material.

9. The adhesive sheet according to Claim 8, wherein said polar material is glass, a polycarbonate resin or an acrylic resin.

10. The adhesive sheet according to any one of Claims 6 to 9, which is used for internal fixation in mobile information terminals.

FIG. 1

```
8
7
8
```

FIG. 2

```
10
7
8
```

FIG. 3

```
8
7
10
7
8
```

FIG. 4

FIG. 5

## INTERNATIONAL SEARCH REPORT

International application No.

PCT/JP2010/066875

A. CLASSIFICATION OF SUBJECT MATTER
*C09J133/14*(2006.01)i, *C09J7/00*(2006.01)i, *C09J11/06*(2006.01)i, *C09J133/08* (2006.01)i, *C09J133/24*(2006.01)i

According to International Patent Classification (IPC) or to both national classification and IPC

B. FIELDS SEARCHED

Minimum documentation searched (classification system followed by classification symbols)
C09J1/00-201/10

Documentation searched other than minimum documentation to the extent that such documents are included in the fields searched
Jitsuyo Shinan Koho          1922-1996   Jitsuyo Shinan Toroku Koho   1996-2010
Kokai Jitsuyo Shinan Koho    1971-2010   Toroku Jitsuyo Shinan Koho   1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2009-155523 A  (JSR Corp.), 16 July 2009 (16.07.2009), claims 1 to 6; paragraphs [0001], [0032], [0036] (Family: none) | 1-10 |
| A | JP 2001-279208 A  (Sekisui Chemical Co., Ltd.), 10 October 2001 (10.10.2001), claims 1 to 6; paragraphs [0001], [0015] to [0016], [0023] (Family: none) | 1-10 |

☒  Further documents are listed in the continuation of Box C.        ☐    See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>    20 October, 2010 (20.10.10) | Date of mailing of the international search report<br>    16 November, 2010 (16.11.10) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2010/066875 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2005-053976 A  (Soken Chemical & Engineering Co., Ltd.),<br>03 March 2005 (03.03.2005),<br>claims 1 to 6; paragraphs [0014], [0016], [0018]<br>(Family: none) | 1-10 |
| A | JP 63-057684 A  (Hiroshi FUKUMOTO),<br>12 March 1988 (12.03.1988),<br>claim 1; page 1, right column, line 5 to page 2, lower left column, line 5; page 3, upper left column, lines 11 to 14; page 3, lower left column, lines 4 to 15<br>(Family: none) | 1-10 |
| A | JP 06-108025 A  (The Nippon Synthetic Chemical Industry Co., Ltd.),<br>19 April 1994 (19.04.1994),<br>claim 1; paragraphs [0009], [0017]<br>(Family: none) | 1-10 |
| A | JP 04-025589 A  (Hitachi Chemical Co., Ltd.),<br>29 January 1992 (29.01.1992),<br>claim 1; page 2, upper right column, line 17 to lower left column, line 9; page 2, lower right column, line 17 to page 3, upper left column, line 9<br>(Family: none) | 1-10 |
| A | JP 2003-193012 A  (Nitto Denko Corp.),<br>09 July 2003 (09.07.2003),<br>claims 1 to 6; paragraph [0054]<br>(Family: none) | 1-10 |
| A | JP 04-145183 A  (Japan Synthetic Rubber Co., Ltd.),<br>19 May 1992 (19.05.1992),<br>claim 1<br>(Family: none) | 1-10 |
| A | JP 2008-239758 A  (Sliontec Corp.),<br>09 October 2008 (09.10.2008),<br>claims 1 to 6; paragraph [0001]<br>(Family: none) | 1-10 |
| A | JP 2007-169327 A  (Lintec Corp.),<br>05 July 2007 (05.07.2007),<br>claims 1 to 5; paragraph [0001]<br>& US 2007/0141288 A1    & KR 10-2007-0065220 A | 1-10 |
| A | JP 2008-248199 A  (JSR Corp.),<br>16 October 2008 (16.10.2008),<br>claims 1 to 6<br>(Family: none) | 1-10 |

Form PCT/ISA/210 (continuation of second sheet) (July 2009)

**EP 2 484 738 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009224039 A
- JP 2009280671 A
- JP 2010102153 A
- JP 2005053976 A
- JP HEI10310754 B
- JP 2006045315 A